# EUROPÄISCHE PATENTSCHRIFT

(11) **EP 1 854 764 B1**
(45) Veröffentlichungstag und Bekanntmachung des Hinweises auf die Patenterteilung: **14.12.2016**
(21) Anmeldenummer: 06009606.2
(22) Anmeldetag: 10.05.2006
(51) Int. Cl.: C02F 1/00

(54) **Reaktor mit Filterplattenstapel**
Reactor comprising a stack of filter plates
Réacteur d'empilement de plaques filtrantes

(43) Veröffentlichungstag der Anmeldung: 14.11.2007
(73) Patentinhaber: Grundfos Management A/S, 8850 Bjerringbro (DK)
(72) Erfinder: Beldring, Finn, 2830 Virum (DK); Rasmussen, Christian, Hammershoj 8830 Tjele (DK)
(74) Vertreter: Vollmann, Heiko

(56) Entgegenhaltungen:
- EP-A- 0 222 937
- EP-A1- 1 260 485
- WO-A-01/56937
- WO-A-98/03245
- WO-A-03/039712
- DE-U1- 20 210 294
- FR-A1- 2 799 391
- JP-A- 61 274 799
- US-A- 5 275 725
- US-A- 5 855 799

## Beschreibung

Die Erfindung betrifft einen Reaktor zur Behandlung von Flüssigkeiten, insbesondere zur Wasseraufbereitung.

Die Aufbereitung von Abwasser kann mechanisch, z. B. durch Filter, biologisch, chemisch oder physikalisch sowie auch in Kombination der vorgenannten Verfahren erfolgen. Bei der biologischen Fluidbehandlung zählt es zum Stand der Technik, so genannte Reaktoren einzusetzen, in welchen die zu behandelnde Flüssigkeit einer großen biologisch aktiven Oberfläche zugeführt werden. Ein solcher Reaktor ist beispielsweise aus WO 02/094721 A1 bekannt. Der dort beschriebene Reaktor weist zwei miteinander kämmende Plattenstapel auf, von denen einer rotierend angetrieben ist, um den auf den Platten der einzelnen Stapel wachsenden biologisch aktiven Belag kontinuierlich mit der durchströmenden Flüssigkeit zu entfernen. Bei diesem bekannten Reaktor ist eine vergleichsweise hohe Pumpleistung erforderlich, um nicht nur das zu behandelnde Fluid durch den Reaktor zu fördern, sondern auch für ausreichenden Austrag des ständig anfallenden biologisch aktiven Belages zu sorgen. Insoweit günstiger ist der aus EP 1 616 621 A1 bekannte Reaktor, bei welchem durch Abstreifelemente die Platten vollständig und regelmäßig gereinigt werden. Allerdings ist auch hier die Fluidumwälzung innerhalb des Reaktors unzureichend, wenn nicht mit ausreichend hoher Pumpleistung durch den Reaktor gefördert wird.

Bei der mechanischen Fluidbehandlung durch Filter zählen Filtervorrichtungen zum Stand der Technik, die aus Stapeln von hohlen Filterplatten gebildet sind, die in einem im Wesentlichen zylindrischen Filtergehäuse ggf. auch rotierend angeordnet sind. Die zu filternde Flüssigkeit wird in das Gehäuse eingeleitet, gelangt durch die im Bereich der Oberfläche der Filterplatten gebildeten Filter in das Innere der Platten und von dort in einen zentralen Kanal, über welchen die gefilterte Flüssigkeit abgezogen wird. Derartige Filterplatten sind beispielsweise aus DE 196 24 176 A1 oder EP 0723791 bekannt, entsprechende Filtervorrichtungen sind aus DE 196 24 176 A1 sowie aus US-PS 5,326,512 bekannt. Aus DE 196 24 176 A1 ist es darüber hinaus bekannt, die Filterplatten an ihren Oberflächen derart zu profilieren, dass bei Rotation des Filterplattenstapels eine gewisse radiale Strömungswirkung erzeugt wird, welche für einen Flüssigkeitsaustausch an der Filteroberfläche, insbesondere zur Entfernung von Rückständen auf der Filterfläche sorgen soll.

WO 03/039712 A zeigt eine Vorrichtung, bei der eine Vielzahl von Filterelementen drehfest mit einer Hohlwelle verbunden sind. Die Hohlwelle ist in einem Gehäuse drehbar aufgenommen.

Der vorliegenden Erfindung liegt die Aufgabe zugrunde, die Fluidumwälzung in einem Reaktor nach Möglichkeit ohne Einsatz zusätzlicher Pumpleistung zu verbessern.

Diese Aufgabe wird gemäß der Erfindung durch einen Reaktor mit den in Anspruch 1 angegebenen Merkmalen gelöst.

Vorteilhafte Ausgestaltungen der Erfindung ergeben sich aus den Unteransprüchen, der nachfolgenden Beschreibung und der Zeichnung. Der erfindungsgemäße Reaktor weist ein rohrförmiges Gehäuse auf, in welchem ein Filterplattenstapel rotierbar angeordnet ist. Die Querschnittsfläche des Reaktorbehälters ist dabei so bemessen, dass sie mindestens im Bereich des Filterplattenstapels die Querschnittsfläche des Filterplattenstapel höchstens um 40 % übersteigt und die Längserstreckung des Reaktorgehäuses ein Vielfaches der Längserstreckung des Filterplattenstapels beträgt.

Der erfindungsgemäße Reaktor weist neben dem Filterplattenstapel, welcher eine mechanische Fluidbehandlung durch mechanische Filterung bewirkt, weitere Fluidbehandlungsmittel auf, wobei die vorgenannte Querschnittsdimensionierung zwischen Reaktorbehälter und Filterplattenstapel dafür sorgt, dass bei Rotation des Filterplattenstapels eine gewisse Pumpwirkung entsteht, welche für eine Umwälzung des Fluids innerhalb des Reaktors sorgt. Dabei ist gemäß der Erfindung die Längserstreckung so gewählt, dass neben der Filterbehandlung weitere Fluidbehandlungen innerhalb des Reaktors erfolgen können, typischerweise biologische Behandlungen, wobei die Pumpwirkung des Filterplattenstapels dazu genutzt wird, auch den übrigen Teil des Reaktors zu durchströmen.

Eine besonders intensive Durchströmung des Reaktors ergibt sich, wenn die Drehachse des Filterplattenstapels und die Achse des Reaktorgehäuses parallel zueinander angeordnet sind, da sich dann eine Durchströmung des Reaktors in Achsrichtung ausbildet. Dabei kann es von Vorteil sein, wenn die Achsen nicht zueinander fluchten, d. h. die Drehachse des Filterplattenstapels außermittig zur Achse des Reaktorgehäuses angeordnet ist.

Gemäß einer Weiterbildung der Erfindung ist der Filterplattenstapel vorteilhaft im Endbereich des Reaktorgehäuses angebracht, wobei der Antrieb zur Rotation des Filterplattenstapels zweckmäßigerweise durch die Stirnseite des Reaktorgehäuses geführt und dort außerhalb des Gehäuses angeordnet ist. Die Anordnung des Antriebs außerhalb des Gehäuses ist besonders günstig, da dieser gegenüber der Umgebung nicht zu kapseln, gut zugänglich und kostengünstig anzubringen ist. Darüber hinaus ist insbesondere die Durchführung und Anbringung an der Stirnseite des Reaktorgehäuses sinnvoll, da dann das typischerweise zylindrische Gehäuse keiner gesonderten mechanischen Bearbeitung unterworfen werden muss.

Innerhalb des Reaktorgehäuses sind weitere Fluidbehandlungseinrichtungen vorgesehen, die so angeordnet sind, dass sie entsprechend ihrer Anordnung im Reaktor nacheinander durchlaufen werden. Es kann also innerhalb des Reaktors eine weitgehend vollständige Fluidbehandlung erfolgen, wobei unterschiedliche Behandlungsverfahren, insbesondere biologische und mechanische eingesetzt werden. Der für den Transport des Fluids innerhalb des Reaktors erforderliche Förderstrom wird dabei vorteilhaft durch die Pumpwirkung des rotierenden Filterplattenstapels aufgebaut oder zumindest unterstützt.

Eine besonders vorteilhafte Kombination von Behandlungsverfahren ergibt sich dann, wenn gemäß einer Weiterbildung der Erfindung innerhalb des Reaktorgehäuses mindestens ein oder ggf. auch mehrere Biofilmreaktoren angeordnet sind, und zwar vorzugsweise an dem vom Filterplattenstapel abgewandten Ende des Reaktors. Da Biofilmreaktoren, wie sie beispielsweise aus dem eingangs genannten Stand der Technik bekannt sind, einen Antrieb zur Rotation der miteinander kämmenden Plattenstapel benötigen, ist diese Anordnung besonders günstig, da der insofern erforderliche Antrieb an der anderen Stirnseite des Reaktorgehäuses durchgeführt und an der Außenseite angebracht werden kann, so dass sowohl der Antrieb für den Filterplattenstapel als auch der Antrieb für den Biofilmreaktor frei zugänglich an den Stirnseiten vorgesehen sind, so dass der zylindrische Gehäuseteil hierfür nicht gesondert angepasst werden muss.

Gemäß einer Weiterbildung der Erfindung kann der Antrieb für den Biofilmreaktor über den Antrieb der Filtereinheit erfolgen, vorteilhaft durch eine mechanische Kopplung zwischen Filterplattenstapel und dem rotierbaren Teil des Biofilmreaktors. Hierdurch kann auf einen gesonderten Antrieb für den Biofilmreaktor völlig verzichtet werden, d. h. es ist nur an einer Seite des Reaktors ein mechanischer Antrieb vorzusehen, was konstruktiv einfach und kostengünstig ist sowie darüber hinaus am anderen Ende Freiraum für die Anbringung anderer Aggregate schafft.

Die Anordnung der Antriebe und ggf. weiterer erforderlicher Aggregatteile oder Leitungsdurchführungen an den Stirnseiten ist besonders zweckmäßig, da dann das Reaktorgehäuse durch ein im Wesentlichen unbearbeitetes zylindrisches oder auch im Querschnitt ovales Rohr gebildet werden kann, das kostengünstig aus Kunststoff, vorzugsweise unter Verwendung eines extrudierten PVC-Polyethylen- oder Polypropylenrohres mit einem Durchmesser von mehr als 200 mm gebildet sein kann. Es versteht sich, dass das Gehäuse auch aus anderen geeigneten Werkstoffen, wie beispielsweise Edelstahl gebildet sein kann. Dabei ist die vorbeschriebene Konstruktion bestehend aus einem Rohr mit zwei endseitigen Deckeln besonders günstig, da unterschiedlich lange Gehäuse und somit Reaktoren hergestellt werden können, ohne dass gravierende konstruktive Änderungen vorzunehmen sind, da lediglich die Länge des rohrförmigen Teils variiert und die endseitigen, typischerweise spanend zu bearbeitenden Deckel unverändert eingesetzt werden können. Zweckmäßigerweise sind die Leitungsanschlüsse für die Fluidzu-und Abfuhr ebenfalls stirnseitig im Reaktorgehäuse angeordnet, um den rohrförmigen Gehäuseteil insoweit unbearbeitet belassen zu können.

Die Durchströmung des Reaktorgehäuses kann noch dadurch gefördert werden, dass dieses geneigt angeordnet wird. Dabei hat sich eine leichte Schrägstellung als vorteilhaft erwiesen, derart, dass die Längsachse des Reaktorgehäuses mit der horizontalen einen Winkel von vorzugsweise unter 30° einschließt. Eine solche Schrägstellung bewirkt eine gezielte Gasabfuhr zum oberen, schräg gestellten Ende innerhalb des Reaktors sowie eine gravitationsbedingte Umwälzung, welche die Pumpwirkung des Filterplattenstapels unterstützen kann. Dabei ist eine Gasblase im oberen Bereich des Reaktors schon aus hydraulischen Gründen von Vorteil, da hierüber Druckspitzen aufgefangen bzw. abgefedert werden können, die bei einem vollständig flüssigkeitsgefüllten Reaktor nur über aufwändige Ventiltechnik sicher abgefangen werden könnten.

Um eine ausreichende und über den aus dem Stand der Technik hinausgehende Pumpwirkung des Filterplattenstapels zu erzielen, ist gemäß einer Weiterbildung der Erfindung vorgesehen, den Filterplattenstapel mit einer Umfangsgeschwindigkeit von mehr als 3 m/s anzutreiben. Dabei ist es zweckmäßig, wenn die Filterplatten im zentralen Bereich eine saugmundähnliche Ausnehmung aufweisen, über welche die Flüssigkeit angesaugt und dann radial/tangential nach außen gefördert wird. Der Abzug der gefilterten Flüssigkeit erfolgt dabei zweckmäßigerweise in an sich bekannter Weise durch einen zentralen Kanal des Filterplattenstapels, der vorteilhaft innerhalb der die Antriebswelle bildenden Teils liegt.

Neben dem vorbeschriebenen, hydraulischen Effekt einer Gasblase innerhalb des Reaktors kann diese jedoch auch aus Gründen der Fluidbehandlung gewünscht sein. Hierzu ist gemäß einer Weiterbildung der Erfindung eine Füllstandsregelung vorgesehen, welche den Flüssigkeitsfüllstand des Reaktors auf einem vorbestimmten Wert, vorzugsweise zwischen 50 und 99 % des Reaktorvolumens hält.

Weiterhin kann für den Reaktor gezielt eine Belüftungseinrichtung vorgesehen sein, bei der beispielsweise an vorgegebener Stelle ein Gas-oder Luftstrom beaufschlagt wird, welcher insbesondere bei Schräganordnung des Behälters diesen durchströmt und im oberen Bereich des Reaktors verbleibt bzw. dort wieder abgeführt wird. Die Belüftungseinrichtung kann je nach Anforderung als geschlossenes, teiloffenes oder offenes System ausgebildet sein. Die Gaszufuhr kann durch den Filterplattenstapel selbst erfolgen, zweckmäßigerweise durch gesonderte Gaszufuhrkanäle innerhalb des zentralen, für die Filtratabfuhr vorgesehenen Kanals. Dabei erfolgt der Austrag der Belüftungseinrichtung zweckmäßigerweise durch den Filterplattenstapel selbst, vorzugsweise durch die Filterfläche, also in umgekehrter Durchströmrichtung zur Flüssigkeit. Beim Durchströmen des Gases durch die Filterflüssigkeit wird eine hohe Oberflächenwirkung erzielt, die Gas-, insbesondere Luftzufuhr wird fein verteilt, d. h. mit einer großen Oberfläche in den Reaktor eingebracht, was deren Wirksamkeit intensiviert. Wenn der Filterplattenstapel durch die Belüftungseinrichtung in seiner Funktion nicht tangiert werden soll, dann ist es zweckmäßig, den Austrag der Belüftungseinrichtung innerhalb des vom Filterplattenstapel abgewandten Bereichs des Reaktorgehäuses anzuordnen.

Die Belüftungseinrichtung umfasst vorteilhaft eine interne Zirkulation innerhalb des Gehäuses, so dass ein im Wesentlichen geschlossenes System innerhalb des Reaktors gebildet werden kann.

Um die Umwälzung innerhalb des Reaktors zu fördern, ist es von Vorteil, am Ende des Filterplattenstapels ein Saugrohr anzuordnen, durch welches die zu filternde Flüssigkeit innerhalb des Reaktorgehäuses angesaugt wird. Dabei hat es sich als vorteilhaft herausgestellt, die Ansaugöffnung nicht direkt am Filterplattenstapel anzuordnen, sondern mit einem Abstand zum Filterplattenstapel, der mindestens der zweifachen Filterplattenstapelhöhe entspricht.

Die Erfindung ist nachfolgend anhand von in der Zeichnung dargestellten Ausführungsbeispielen näher erläutert. Es zeigen:
- Fig. 1: in perspektivischer Darstellung eine Filterplatte für einen Filterplattenstapel eines Reaktors gemäß der Erfindung,
- Fig. 2: in Seitenansicht den Aufbau der Filterplatte nach Fig. 1,
- Fig. 3: in perspektivischer Explosionsdarstellung den Aufbau der Filterplatte gemäß Fig. 1,
- Fig. 4: eine Draufsicht auf das zentrale Bauteil der Filterplatte gemäß Fig. 1,
- Fig. 5: eine Seitenansicht von drei zu einem Stapel angeordneten Filterplatten,
- Fig. 6: die Anordnung gemäß Fig. 5 in perspektivischer Darstellung,
- Fig. 7: in perspektivischer Darstellung drei zu einem Stapel angeordnete Filterplatten mit Schaufeln an einer Plattenseite,
- Fig. 8: in schematischer Schnittdarstellung einen Reaktor gemäß der Erfindung,
- Fig. 9: einen Reaktor gemäß Fig. 1 in schräg gestellter Lage,
- Fig. 10: in schematischer Schnittdarstellung eine weitere Ausführungsform eines Reaktors gemäß der Erfindung,
- Fig. 11: den die Filterplatten umfassenden Teil des Reaktors in vergrößerter Darstellung gemäß Fig. 10,
- Fig. 12: eine weitere Ausführungsform eines Reaktors in schematischer Teilschnittdarstellung,
- Fig. 13: in vergrößerter Darstellung das biofilmreaktorseitige Ende des Reaktors im Schnitt,
- Fig. 14: eine Stirnansicht des Reaktors in Richtung des Pfeils XIV in Fig. 13,
- Fig. 15: einen Schnitt längs der Schnittlinie XV-XV in Fig. 13 und
- Fig. 16: eine serielle Filteranordnung in Schnittdarstellung

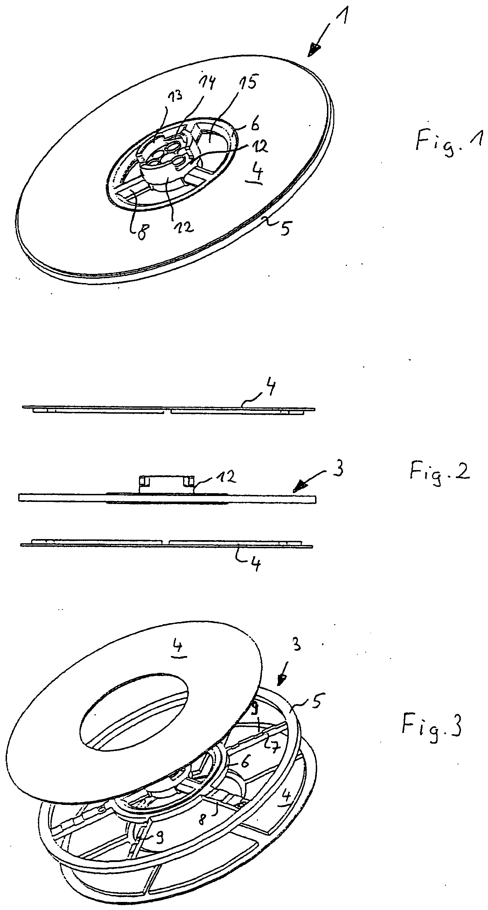

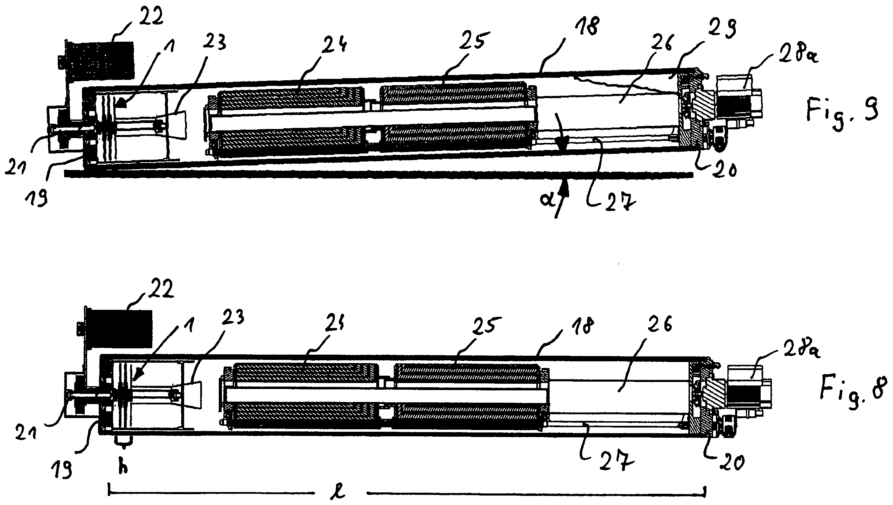

Die beispielhaft in den Figuren 8 bis 15 dargestellten Reaktoren weisen jeweils einen Filterplattenstapel 1 auf, der aus einer Vielzahl von konzentrisch zueinander angeordneter und zu einem Stapel aufeinander gesteckter Filterplatten 2 gebildet ist, deren Aufbau sich im Einzelnen aus den Figuren 1 bis 4 ergibt.

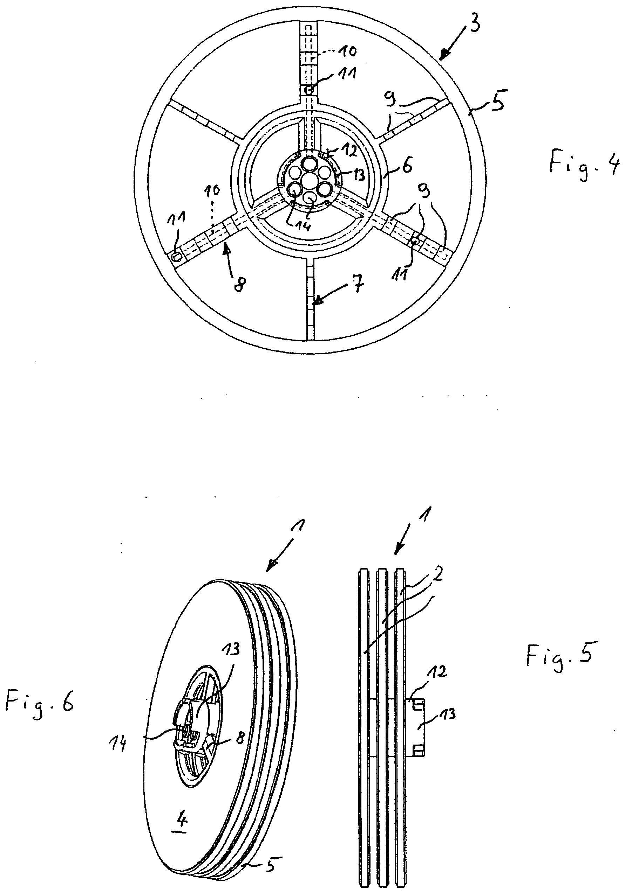

Jede Filterplatte 2 weist ein zentrales Bauteil 3 auf, das beispielsweise als Spritzgussteil aus Kunststoff ausgebildet sein kann und welches die tragende und kanalbildende Funktion der Filterplatte 2 darstellt. Der eigentliche Filter wird durch zwei ringförmige Filterscheiben 4 gebildet, die auf dem zentralen Bauteil 3 zu beiden Seiten angeordnet sind und zusammen mit diesen die Filterplatte 2 bilden. Das zentrale Bauteil 3 hat in Draufsicht (Fig. 4) eine kreisrunde Form und weist an seinem Außenumfang einen geschlossenen Außenring 5 auf, dessen Außenseite auch die Außenseite der Filterplatte 2 bildet. Mit radialem Abstand ist innerhalb des Außenrings 5 ein Innenring 6 angeordnet, der über drei über 120° verteilt angeordnete Tragrippen 7 mit dem Außenring 5 verbunden ist. Jeweils um 60° versetzt zu den Tragrippen 7 sind drei leitungsführende Rippen 8 angeordnet, die in gleicher Weise wie die Tragrippen auf der zu den Filterscheiben 4 gerichteten Seiten Rücksprünge 9 aufweisen, welche die Flüssigkeitszirkulation innerhalb der durch die Filterscheiben 4 beidseitig abgedeckten zentralen Bauteils 3 gewährleistet. Durch diese Rücksprünge 9 ist ein Freiraum zwischen den ringförmigen Filterscheiben 4 und dem zentralen Bauteil 3 gebildet, auf dessen Rippen 7, 8 sowie Ringen 5, 6 die Filterscheiben 4 zu beiden Seiten aufliegen und gestützt sind.

Innerhalb der leitungsführenden Rippen 8 sind Kanäle 10 angeordnet, die auf unterschiedlichen Radien innerhalb der Filterplatte 2 münden. Die Kanalmündungen sind mit 11 gekennzeichnet.

Die leitungsführenden Rippen 8 verbinden nicht nur den Außenring 5 mit dem Innenring 6, sondern sind radial weiter nach Innen geführt bis zu einem zentralen im Wesentlichen zylindrischen Anschlussbauteil 12, mit dem die Rippen 8 endseitig fest verbunden sind und in welche die Kanäle 10 münden. Das Anschlussbauteil 12 ist außen abgestuft zylindrisch ausgebildet und weist Mitnehmer 13 auf, so dass Anschlussbauteile 12 benachbarter Filterplatten 2 derart ineinander gesteckt werden, dass die Mitnehmer 13 in dem Bereich zwischen benachbarten leitungsführenden Rippen 8 formschlüssig und dicht zur Anlage kommen. Durch diese Mitnehmer 13 in Verbindung mit den Rippen 8 sind die so miteinander verbundenen Filterplatten 2 drehfest miteinander verbunden, so dass ein Drehmoment zur Rotation des Filterstapels von einer zur anderen Platte 2 übertragen wird, ohne dass hierfür eine Welle erforderlich ist, die Anschlussbauteile 12 bilden somit eine Welle, die so ausgestaltet ist, dass sie auch flüssigkeitsdicht nach außen ist.

In einfachster Ausführung sind die Anschlussbauteile 12 als abgestufte Hohlzylinder ausgebildet, dann ist in einer daraus gebildeten Hohlwelle ein zentraler für die Abfuhr von Filtrat bestimmter Kanal gebildet. In der vorstehend darstellten Ausführungsvariante sind jedoch in dem Anschlussbauteil 12 insgesamt sieben Kanäle 14 vorgesehen, von denen drei im Bereich der dort mündenden leitungsführenden Rippen 8 angeordnet sind und somit für jede dieser Rippen 8 einen gesonderten Kanal 14 bilden, derart, dass bei entsprechend aus einer Vielzahl von Filterplatten 2 aufgebauten Filterplattenstapel 1 diese drei Kanäle unterschiedlichem radialem Niveau bezogen auf die Drehachse der Filterplatten zugeordnet sind. Es kann über diese Kanäle Filtrat abgezogen und über zumindest einen der Kanäle ein Zusatzstoff, insbesondere Luft auf vorbestimmtem radialen Niveau in die Filterplatten 2 eingebracht werden. Die auf diese Weise innerhalb der Anschlussbauteile 12 gebildeten Kanäle 14 sind sowohl nach außen als auch untereinander abgedichtet, so dass sie voneinander getrennte Leitungen bilden, die am Ende des Filterplattenstapels über ein entsprechend mitrotierendes (nicht dargestelltes) Abschlussbauteil angeschlossen sind.

In dem Bereich zwischen dem Innenring 6 und dem Anschlussbauteil 12 ist eine ringförmige, durch die leitungsführenden Rippen 8 durchsetze Durchbrechung 15 in der Filterplatte 2 gebildet.

In montiertem Zustand wird eine Filterplatte 2 durch ein zentrales Bauteil 3 gebildet, an welchem zu beiden Seiten Filterscheiben 4 angebracht sind, welche den Ringraum zwischen dem Innenring 6 und dem Außenring 5 nach außen hin abdecken. Derart gebildete Filterplatten 2 sind über ihre Anschlussbauteile 12 zu einem Filterplattenstapel ineinander gesteckt, wie dies anhand von Fig. 5 ersichtlich ist. Dabei ist das Anschlussbauteil 12 so ausgebildet, dass die Mitnehmer 13 einen Innenumfang aufweisen, welcher etwa dem Außenumfang des Anschlussbauteils 12 im Bereich der Rippen 8 entspricht, so dass Anschlussbauteile 2 ineinander gesteckt werden können, wodurch die eigentlichen Filterplatten parallel zueinander mit Abstand angeordnet sind und durch die Anschlussbauteile 12 über die dann zueinander fluchtenden Kanäle 14 Leitungen gebildet sind, die zueinander und zur Durchbrechung 15 abgedichtet sind. Ein so gebildeter Filterplattenstapel wird innerhalb des Reaktors rotierend angetrieben, wobei die Flüssigkeit über die Durchbrechungen 15 zugeführt wird und sich dann zwischen gegenüberliegender Filterscheiben 4 benachbarter Filterplatten 2 radial nach außen bewegt. Auf diesem Weg werden die Filterscheiben 4 flächig und unter Druck mit der zu filternden Flüssigkeit benetzt, die dabei zumindest teilweise die Filterscheiben 4 durchdringt und als gefilterte Flüssigkeit, also als Filtrat in das Innere der Filterplatten 2 gelangt. Über die Kanalmündungen 11 wird die im Inneren der Filterplatten 2 befindliche Flüssigkeit zum Anschlussbauteil 12 und von dort durch die durch die Kanäle 14 gebildeten Leitungen zentral aus dem Filterplattenstapel 1 abgeführt und dann aus dem Reaktor geleitet. Die zwischen den Filterplatten 2 verbleibende und nicht die Filterscheiben 4 passierende Masse wird mit dem durch die Durchbrechungen 15 angesaugten und radial nach außen geführten Förderstrom in den Reaktor rückgeführt.

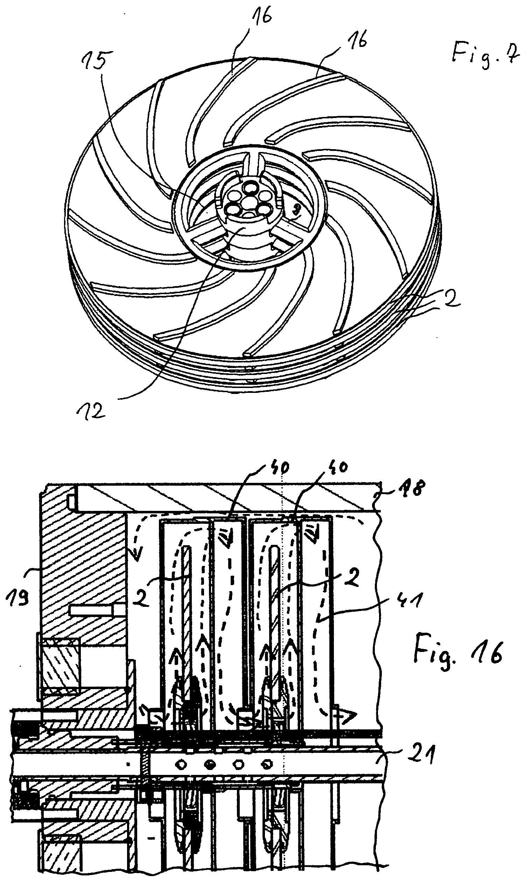

Diese Pumpwirkung kann noch dadurch verstärkt werden, dass auf den Filterplatten 2 einseitig Schaufeln 16 angebracht sind, die sich, wie bei Kreiselpumpenrädern üblich, vom Innenring 6 bis zum Außenring 5 erstrecken und dabei einen radialen/tangentialen Verlauf haben, wie dies beispielhaft in Fig. 7 dargestellt ist. Die Schaufeln 16 weisen eine konstante Schaufelbreite auf und erstrecken sich senkrecht von der Flachseite der Filterscheiben 4. Sie können so ausgebildet sein, dass die Schaufeln 16 einer Filterplatte 2 an der im Filterplattenstapel benachbarten Filterplatte 2 anliegen, so dass sich quasi geschlossene Kreiselräder bilden, welche bei Rotation eine gute Pumpwirkung erzeugen, was nicht nur die Umwälzung der Flüssigkeit innerhalb der Filtervorrichtung fördert, sondern auch die Filtereffizienz, da nahe dem Außenumfang der Filterplatten 2 ein erhöhter Druck ansteht, welcher den Filtervorgang forciert.

Der vorbeschriebene Filterplattenstapel 1 ist innerhalb des Reaktors angeordnet. Der Reaktor selbst weist ein im Wesentlichen zylindrisches Reaktorgehäuse auf, das aus einem Rohrabschnitt 18 und zwei endseitig daran befestigten in den Rohrabschnitt eingreifenden und diesen stirnseitig überragenden Deckeln 19 und 20 gebildet ist. Der Rohrabschnitt 18 ist durch ein extrudiertes Kunststoffrohr gebildet, wohingegen die Deckel 19 und 20 typischerweise als spanend bearbeitete Metallteile ausgebildet sind, die sämtliche Anschlüsse/Durchbrüche in das Gehäuse aufweisen.

Der schematisch dargestellte Filterplattenstapel 1 ist bei den dargestellten Reaktoren am linksseitigen Ende angeordnet. Dabei ist der Durchmesser der Filterplatten 2 bezogen auf den Innendurchmesser des Gehäuses, also des Rohrabschnitts 18 so bemessen, dass die Querschnittsfläche des Rohrabschnitts 18 in diesem Bereich nur um etwa 20 % größer als die Querschnittsfläche des Filterplattenstapels ist, um eine intensive Pumpwirkung zu erzielen. Wie schon die schematischen Darstellungen des Reaktors gemäß Fig. 8 und Fig. 9 verdeutlichen, ist die Länge l des Reaktorgehäuses um ein Vielfaches größer als die Höhe h des Filterplattenstapels 1. Angetrieben wird der Filterplattenstapel 1 durch eine durch den linksseitigen Deckel 19 durchgeführte Hohlwelle 21, welche über ein Getriebe mittels eines Antriebsmotors 22 rotierbar ist, der am Deckel 19 befestigt und so angeordnet ist, dass er neben dem Rohrabschnitt 18 angeordnet ist. Über die Hohlwelle 21 wird das Filtrat aus dem Reaktor abgezogen. Darüber hinaus ist eine Verbindung zu einem der Kanäle 10 vorgesehen, welche mit einer hier nicht im Einzelnen dargestellten Belüftungseinrichtung leitungsverbunden sind, über welche dem Reaktor Luft zugeführt werden kann, welche fein verteilt über die Filterplatten austritt.

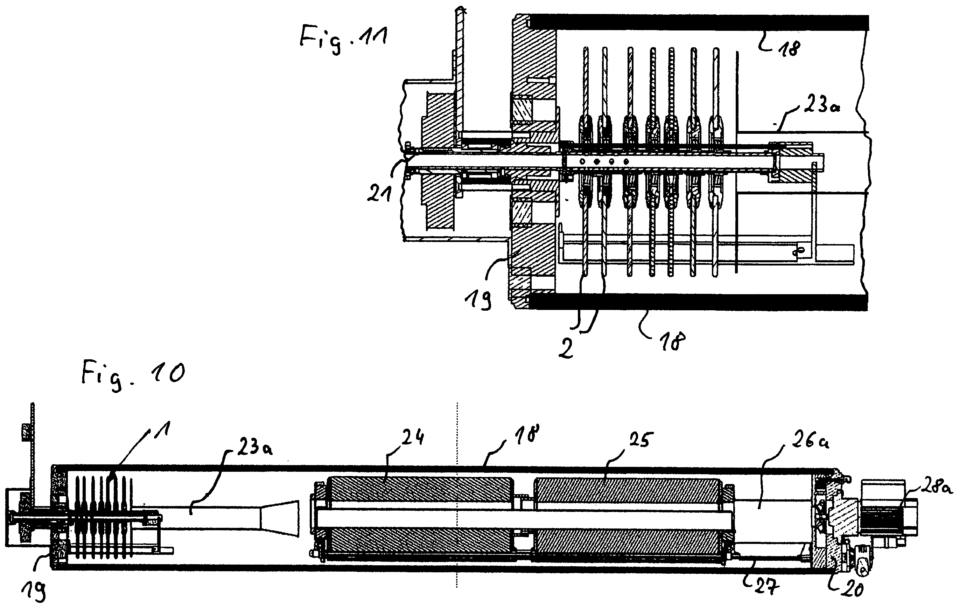

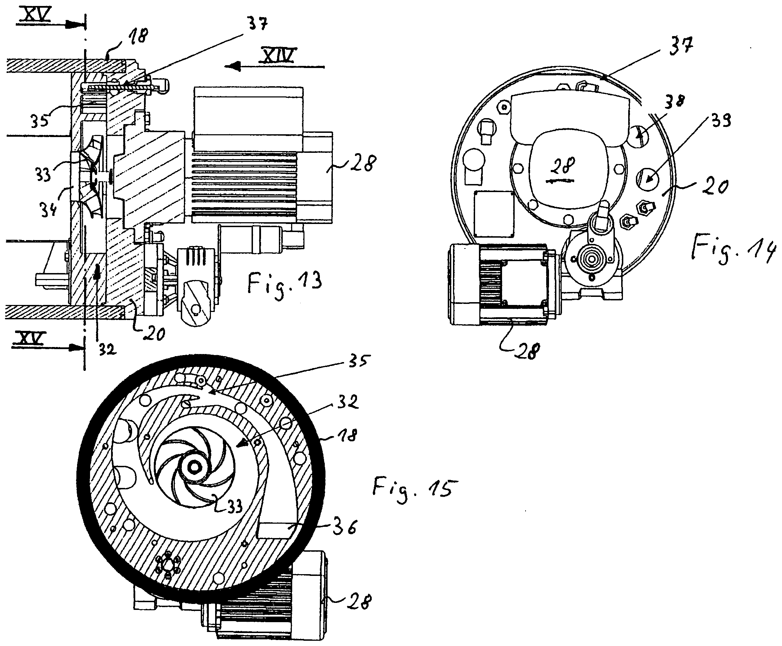

Innerhalb des Reaktors ist der Filterplattenstapel axial durch ein Saugrohr 23 überdeckt, welches den Innenring 6 der Filterplatte 2 übergreift, die am weitesten innerhalb des Reaktorgehäuses angeordnet ist. Durch dieses Saugrohr 23 wird der Saugmund des Filterplattenstapels 1 weiter nach innen in das Reaktorgehäuse verlegt. Bei der anhand der Figuren 8 und 9 dargestellten Ausführungsform weist das Saugrohr 23 eine Länge auf, die etwa der dreifachen Höhe h des Filterplattenstapels 1 entspricht. Bei den anhand der Figuren 10 bis 12 dargestellten Varianten weist das Saugrohr 23a eine deutlich größere Länge auf und endet mit Abstand fluchtend zum Filterplattenstapel 1. Daran schließt sich in allen Ausführungsvarianten mit Abstand ein Biofilmreaktor an, der aus zwei mit Abstand axial hintereinander angeordneten Scheibenstapeln 24 und 25 besteht und der koaxial in dem zylindrischen Gehäuse mit Abstand zum Saugrohr 23 sowie zu dem in den Figuren rechtsseitigen Deckel 20 angeordnet ist. Die Scheibenstapel 24 und 25 sind rotierbar angetrieben und über eine Halterung 26 mit Abstand innerhalb des Deckels 20 befestigt und antriebsverbunden. Der Aufbau der Scheibenstapel 24 und 25, dessen Lagerung auf der Halterung 26 sowie dessen Antrieb über die Welle 27 ist im Einzelnen aus EP 1 616 621 A1 bekannt, auf die in diesem Zusammenhang ausdrücklich Bezug genommen wird. Das Funktionsprinzip entspricht dem anhand von Fig. 3 bis 6 in vorgenannter Druckschrift beschriebenen. Die Welle 27 ist durch den in den Figuren 8 bis 10 rechtsseitigen Deckel 20 hindurchgeführt und dort über ein Getriebe mit einem Antriebsmotor 28 (Fig. 14, 15) verbunden.

Die dargestellten Reaktoren umfassen somit in axialer Richtung hintereinander einen Biofilmreaktor sowie einen mechanischen Filter in Form eines Filterplattenstapels 1. Dabei sorgt die Rotation des Filterplattenstapels 1 für eine Pumpwirkung innerhalb des Reaktorgehäuses, welche eine intensive Durchströmung des gesamten Gehäuses erzeugt. Über das innere Ende des Saugrohrs 23 wird Flüssigkeit insbesondere aus dem Bereich zwischen den Scheibenstapeln 24 und 25 und der Halterung 26 angesaugt, gelangt durch die Filterplattenstapel 1, wird dort radial nach außen gefördert, um dann längs der Innenseite des Rohrabschnitts 18 zum anderen Ende, also in Richtung zum Deckel 20 zu strömen, wo sie radial von außen nach innen in die Scheibenstapel 24 und 25 wieder einströmt. Dabei wird das Filtrat über die Hohlwelle 21 aus dem Filterplattenstapel 1 abgezogen, gleichzeitig wird über den Filterplattenstapel 1 über mindestens einen der Kanäle 10 Luft eingeblasen, welche bei dem in Fig. 9 schräg gestellten Reaktor das Reaktorgehäuse von unten, also vom linksseitigen Deckel 19 langsam nach oben zum rechtsseitigen Deckel 20 durchwandert, um sich in dem dort oberen Teil des Gehäuses in Form einer Luftblase 29 zu sammeln und über eine nicht im Einzelnen dargestellte Füllstandsregelung wieder abgezogen zu werden.

Der Reaktor gemäß Fig. 9 ist gegenüber der Horizontalen mit seiner Längsachse um einen Winkel α schräg gestellt, der bei der dargestellten Ausführung 6° beträgt.

Die Filterplatten 2 des Filterplattenstapels können, was nicht im Einzelnen dargestellt ist, mit einer elektrisch leitenden Schicht versehen sein, welche über eine Leitungsverbindung elektrisch isoliert durch den Deckel 19 herausgeführt und dort mit einem Potential beaufschlagt werden kann, so dass in diesem Bereich der Vorrichtung zusätzlich auch eine physikalische, insbesondere elektrische Behandlung der Flüssigkeit erfolgen kann. Dabei kann eine Spannung zwischen benachbarten Filterplatten 2 angelegt sein oder auch zwischen den Kontaktflächen des Filterplattenstapels 1 und einem oder beiden der Deckel 19 und 20. Ggf. kann auch innerhalb des Rohrabschnitts 18 eine Elektrode wandseitig vorgesehen sein.

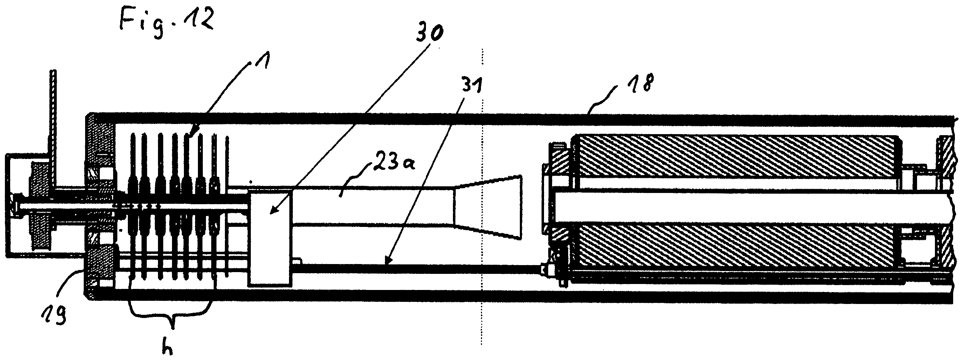

Bei den anhand der Figuren 8 bis 10 dargestellten Reaktoren werden die Scheibenstapel 24 und 25 mittels eines Antriebsmotors 28 und eines daran angeschlossenen Getriebes, die außen am Deckel 20 angeordnet und über die Welle 27 in das Reaktorinnere geführt sind, rotierend angetrieben. Alternativ können der Biofilmreaktor, insbesondere die Scheibenstapel 24 und 25 über den Antrieb angetrieben werden, welcher den Filterplattenstapel 1 antreibt. Dies ist anhand von Fig. 12 schematisch dargestellt. Dort ist das innerhalb des Reaktors liegende freie Ende der die Filterplatten 2 tragenden Hohlwelle in ein Getriebe 30 geführt, dessen Abtriebswelle 31 bis zu den Scheibenstapeln 24, 25 reicht und diese antreibt. Da die Scheibenstapel 24, 25 mit im Vergleich zum Filterplattenstapel deutlich geringerer Drehzahl angetrieben werden, ist das Getriebe 30 als Untersetzungsgetriebe ausgelegt. Bei dieser Anordnung bleibt der rechtsseitige Deckel 20 frei von Antriebsmitteln für den Biofilmreaktor.

Wenn für den Biofilmreaktor eine gesonderte Belüftung notwendig ist, dann kann der Deckel 20, wie anhand der Figuren 13 bis 15 dargestellt ist, auf seiner Innenseite mit einer Ejektorpumpe 32 versehen sein, deren Saugmund zentral innerhalb des Reaktors mündet und der durch eine durch ein Rückschlagventil gesicherte Lüftungsöffnung von außen Luft ansaugt, welche durch den geförderten Flüssigkeitsstrom nach Art eines Ejektors mitgerissen wird und im Bereich des Außenumfangs in den Reaktor einströmt. Der Aufbau dieser Ejektorpumpe 32 ist anhand der Figuren 13 bis 15 im Einzelnen sichtbar. Das Pumpenlaufrad 33 taucht in die pumpengehäuseseitige Ansaugöffnung 34 ein. Die radial an das Pumpenlaufrad 33 anschließende Pumpenschnecke ist ejektorartig aufgebaut und zieht im Ejektorbereich 35 Luft an, die fein verteilt mit der Flüssigkeit mitgeführt wird, um dann nahe dem Außenumfang innerhalb des Reaktors im Bereich der Öffnung 36 auszutreten. Angetrieben wird das Pumpenlaufrad durch einen außerhalb des Deckels 20 angeordneten Antriebsmotor 28.

Wie anhand von Fig. 13 sichtbar ist, ist im oberen Bereich des Deckels 19 ein Flüssigkeitssensor 37 angeordnet, der Teil einer Füllstandsregelung ist, über welche die im Reaktor befindliche Luftblase 29 mit im Wesentlichen konstantem Volumen gehalten wird.

In dem Deckel 20 sind darüber hinaus noch Anschlüsse 38 und 39 vorgesehen, die den außenseitigen Teil entsprechender Durchgangsbohrungen bilden und welche die Zu- und Abführöffnungen für die Flüssigkeit innerhalb des Reaktors bilden.

Anhand von Fig. 16 ist beispielhaft dargestellt, wie ein Filterplattenstapel durch entsprechende Leiteinrichtungen so ausgebildet ist, dass die Filterplatten in Reihe liegen, also nacheinander folgend umströmt werden. Die hierzu vorgesehene Leiteinrichtung 40 umgibt die in Fig. 16 linksseitige Filterplatte 2 derart, dass lediglich eine ringförmige Öffnung im Bereich des Saugmunds linksseitig verbleibt und im Übrigen rechtsseitig nahe dem oberen Außenumfang der Filterplatte 2 eine Öffnung gebildet ist. Die durch die Pumpwirkung der Filterscheibe 2 angesaugte Flüssigkeit wird also längs der Scheibe radial nach außen geleitet, wo sie dann in Fig. 16 rechtsseitig nahe dem Außenumfang um 180° umgelenkt und dann wiederum radial nach innen geleitet wird, wo wiederum eine ringförmige Öffnung zu der sich rechtsseitig daran anschließenden zweiten Filterplatte 2 gebildet ist. Die Leiteinrichtungen 40 bilden also jeweils ein Gehäuse, welches zwei in Achsrichtung hintereinander liegende und im Wesentlichen geschlossen ausgebildete Zylinderräume aufweist, die an ihren Stirnseiten jeweils eine zentrale Öffnung aufweisen und deren die Zylinderräume trennende Wand nahe dem Außenumfang zur Bildung eines Ringspalts durchbrochen ist. Eine solche Leiteinrichtung bildet zusammen mit der darin rotierenden Filterplatte 20 eine Art Pumpenstufe. Durch die Zwangsführung innerhalb der Leiteinrichtungen 40 entsteht somit die Pumpwirkung einer mehrstufigen Pumpe, d. h. am Eingang der in Fig. 16 rechtsseitigen Leiteinrichtung 40 steht der Ausgangsdruck der durch die linksseitige Filterplatte 2 erzeugte Druck an, der darauf folgend durch die in Fig. 16 rechtsseitige Filterplatte 2 in Verbindung mit der dieser zugeordneten Leiteinrichtung 40 weiter erhöht wird. Durch eine solche Anordnung können auch zähe Filtermassen abtransportiert werden. Die dadurch bedingte Durchströmung des Filterplattenstapels ist durch die unterbrochene Linie 41 dargestellt. Auch bei dieser Ausführung wird das Filtrat, also die von Schwebstoffen gereinigte Flüssigkeit, durch das Innere der Filterplatten 2 und die Hohlwelle 21 abgezogen. Dadurch, dass mit jeder Filterstufe die Druckdifferenz zur Umgebung, insbesondere zu dem in der Hohlwelle 21 herrschenden Druck wächst, wird auch die Filterwirkung von Stufe zu Stufe höher, d. h. es wird in druckhöheren Filterstufen Filtrat abgezogen, welches aufgrund der geringeren Druckdifferenz in den davor liegenden Stufen noch nicht abgezogen wurde. Es versteht sich, dass anhand von Fig. 16 nur der prinzipielle Aufbau einer solchen Anordnung dargestellt ist, dass grundsätzlich jedoch eine Vielzahl solcher aus Filterplatten 2 und Leiteinrichtung 40 gebildeten Pumpenstufen hintereinander geschaltet werden können.

### Bezugszeichenliste

- 1: - Filterplattenstapel
- 2: - Filterplatten
- 3: - Zentrales Bauteil
- 4: - Filterscheiben
- 5: - Außenring
- 6: - Innenring
- 7: - Tragrippen
- 8: - Leitungsführende Rippen
- 9: - Rücksprünge
- 10: - Kanäle
- 11: - Kanalmündungen
- 12: - Anschlussbauteil
- 13: - Mitnehmer
- 14: - Kanäle in 12
- 15: - Durchbrechung
- 16: - Schaufeln
- 18: - Rohrabschnitt
- 19: - linksseitiger Deckel
- 20: - rechtsseitiger Deckel
- 21: - Hohlwelle
- 22: - Antriebsmotor für Filterplattenstapel
- 23: - Saugrohr
- 23a: - Saugrohr in den Figuren 10 bis 12
- 24: - Scheibenstapel
- 25: - Scheibenstapel
- 26: - Halterung für Scheibenstapel
- 26a: - Halterung in Fig. 10
- 27: - Welle
- 28: - Antriebsmotor für Pumpe
- 28a: - Antriebsmotor für Scheibenstapel
- 29: - Luftblase
- 30: - Getriebe
- 31: - Abtriebswelle
- 32: - Ejektorpumpe
- 33: - Laufrad
- 34: - Ansaugöffnung
- 35: - Bereich
- 36: - Öffnung
- 37: - Flüssigkeitssensor
- 38: - Anschluss
- 39: - Anschluss
- 40: - Leiteinrichtung
- 41: - Durchströmungsrichtung

- α: - Winkel
- h: - Höhe des Filterplattenstapels
- I: - Länge des Reaktors

## Patentansprüche

1. Reaktor mit einem rohrförmigen Gehäuse (18, 19, 20), in welchem ein Filterplattenstapel (1) rotierbar angeordnet ist, **dadurch gekennzeichnet, dass** die Querschnittsfläche des Reaktorbehälters (18) mindestens im Bereich des Filterplattenstapels (1) die Querschnittsfläche des Filterplattenstapels (1) um höchsten 40 % übersteigt und die Längserstreckung (I) des Reaktorgehäuses (18, 19, 20) ein Vielfaches der Längserstreckung (h) des Filterplattenstapels (1) beträgt, dass innerhalb des Reaktorgehäuses (18, 19, 20) weitere Fluidbehandlungseinrichtungen (24, 25) vorgesehen sind und dass die Behandlungseinrichtungen (1, 24, 25) entsprechend ihrer Anordnung im Reaktor nacheinander durchlaufen werden.

2. Reaktor nach Anspruch 1, **dadurch gekennzeichnet, dass** die Drehachse des Filterplattenstapels (1) und die Achse des Reaktorgehäuses (18, 19, 20) parallel und vorzugsweise mit Abstand zueinander angeordnet sind.

3. Reaktor nach einem der vorhergehenden Ansprüche, **dadurch gekennzeichnet, dass** der Filterplattenstapel (1) im Endbereich des Reaktorgehäuses (18, 19, 20) angebracht und vorzugsweise durch einen stirnseitig außerhalb des Reaktorgehäuses angeordneten Antrieb (22) rotierbar ist.

4. Reaktor nach einem der vorhergehenden Ansprüche, **dadurch gekennzeichnet, dass** innerhalb des Reaktorgehäuses (18, 19, 20) mindestens ein Biofilmreaktor (24, 25) angeordnet ist, vorzugsweise an dem vom Filterplattenstapel (1) abgewandten Ende des Reaktors.

5. Reaktor nach Anspruch 4, **dadurch gekennzeichnet, dass** der Biofilmreaktor (24, 25) rotierbar antreibbar ist, wobei der Antrieb über die Filtereinheit (1) erfolgt.

6. Reaktor nach Anspruch 4, **dadurch gekennzeichnet, dass** der Antrieb (28) für einen Biofilmreaktor (24, 25) an der Außenseite des Reaktorgehäuses (18, 19, 20), vorzugsweise an einer der Stirnseiten des Reaktorgehäuses angeordnet ist.

7. Reaktor nach Anspruch 6, **dadurch gekennzeichnet, dass** der Antrieb (28) für einen Biofilmreaktor (24, 25) an dem vom Filterplattenstapel (1) abgewandten Ende des Reaktors angeordnet ist.

8. Reaktor nach einem der vorhergehenden Ansprüche, **dadurch gekennzeichnet, dass** das Reaktorgehäuse (18, 19, 20) geneigt angeordnet ist, derart, dass seine Längsachse mit der Horizontalen einen Winkel von vorzugsweise unter 30° einschließt.

9. Reaktor nach einem der vorhergehenden Ansprüche, **dadurch gekennzeichnet, dass** der Filterplattenstapel (1) mit einer Umfangsgeschwindigkeit von mehr als 3 m/s angetrieben ist.

10. Reaktor nach einem der vorhergehenden Ansprüche, **dadurch gekennzeichnet, dass** das Reaktorgehäuse aus Kunststoff ausgebildet ist, vorzugsweise unter Verwendung eines extrudierten PVC-, Polyethylen- oder Polypropylenrohres mit einem Durchmesser von mehr als 200 mm aufgebaut ist.

11. Reaktor nach einem der vorhergehenden Ansprüche, **dadurch gekennzeichnet, dass** eine Füllstandsregelung vorgesehen ist, welche den Flüssigkeitsfüllstand des Reaktors auf einen vorbestimmten Wert, vorzugsweise zwischen 50 % und 99 % des Reaktorvolumens hält.

12. Reaktor nach einem der vorhergehenden Ansprüche, **dadurch gekennzeichnet, dass** Leitungsanschlüsse für Fluidzu- und abfuhr stirnseitig im Reaktorgehäuse angeordnet sind.

13. Reaktor nach einem der vorhergehenden Ansprüche, **dadurch gekennzeichnet, dass** eine Belüftungseinrichtung vorgesehen ist.

14. Reaktor nach Anspruch 13, **dadurch gekennzeichnet, dass** der Austrag der Belüftungseinrichtung innerhalb des Filterplattenstapels (1) angeordnet ist und vorzugsweise durch die Filterfläche erfolgt.

15. Reaktor nach Anspruch 13, **dadurch gekennzeichnet, dass** der Austrag der Belüftungseinrichtung innerhalb des vom Filterplattenstapel (1) abgewandten Bereichs des Reaktorgehäuses (18, 19, 20) angeordnet ist

16. Reaktor nach einem der Ansprüche 13 bis 15, **dadurch gekennzeichnet, dass** die Belüftungseinrichtung eine interne Zirkulation innerhalb des Gehäuses (18, 19, 20) umfasst.

17. Reaktor nach einem der vorhergehenden Ansprüche, **dadurch gekennzeichnet, dass** am Ende des Filterplattenstapels (1) ein Saugrohr (23) angeordnet ist, dessen Ansaugöffnung mit einem Abstand zum Filterplattenstapel (1) angeordnet, welcher mindestens der zweifachen Filterplattenstapelhöhe (h) entspricht.

## Claims

1. A reactor with a tubular casing (18, 19, 20), in which a filter plate stack (1) is rotatably arranged, **characterised in that** the cross-sectional area of the reactor container (18) at least in the region of the filter plate stack (1) exceeds the cross-sectional area of the filter plate stack (1) by 40% at the most, and the longitudinal extension (l) of the reactor casing (18, 19, 20) is a multiple of the longitudinal extension (h) of the filter pate stack (l), that further fluid treatment devices (18, 19, 20) are provided within the reactor casing (24, 25) and that the treatment devices (1, 24, 25) are successively run through according to their arrangement in the reactor.

2. A reactor according to claim 1, **characterised in that** the rotation axis of the filter plate stack (1) and the axis of the reactor casing (18, 19, 20) are arranged parallel to one another and preferably at a distance to one another.

3. A reactor according to one of the preceding claims, **characterised in that** the filter plate stack (1) is attached in the end region of the reactor casing (18, 19, 20) and is preferably rotatable by a drive (22) which is arranged outside the reactor casing at the face side.

4. A reactor according to one of the preceding claims, **characterised in that** at least one bio-film reactor (24, 25) is arranged within the reactor casing (18, 19, 29), preferably at the end of the reactor which is away from the filter plate stack (1).

5. A reactor according to claim 4, **characterised in that** the bio-film reactor (24, 25) is rotatably drivable, wherein the drive is effected via the filter unit (1).

6. A reactor according to claim 4, **characterised in that** the drive (28) for a bio-film reactor (24, 25) is arranged on the outer side of the reactor casing (18, 19, 20), preferably on one of the face sides of the reactor casing.

7. A reactor according to claim 6, **characterised in that** the drive (28) for a bio-film reactor (24, 25) is arranged at the end of the reactor which is away from the filter plate stack (1).

8. A reactor according to one of the preceding claims, **characterised in that** the reactor casing (18, 19, 20) is arranged in an inclined manner, such that its longitudinal axis encloses an angle with the horizontal of preferably below 30°.

9. A reactor according to one of the preceding claims, **characterised in that** the filter plate stack (1) is driven with a peripheral speed of more than 3 m/s.

10. A reactor according to one of the preceding claims, **characterised in that** the reactor casing is formed from plastic, preferably amid the use of an extruded PVC tube, polyethylene tube or polypropylene tube, with a diameter of more than 200 mm.

11. A reactor according to one of the preceding claims, **characterised in that** a filling level regulation is provided, wherein this maintains the fluid level of the reactor to a predefined value, preferably between 50% and 99% of the reactor volume.

12. A reactor according to one of the preceding claims, **characterised in that** conduit connections for the fluid feed and discharge are arranged in the reactor casing at the face side.

13. A reactor according to one of the preceding claims, **characterised in that** a ventilation device is provided.

14. A reactor according to claim 13, **characterised in that** the discharge of the ventilation device is arranged within the filter plate stack (1) and is preferably effected through the filter surface.

15. A reactor according to claim 13, **characterised in that** the discharge of the ventilation device is arranged within the region of the reactor casing (18, 19, 20) which is away from the filter plate stack (1).

16. A reactor according to one of the claims 13 to 15, **characterised in that** the ventilation device has an internal circulation within the casing (18, 19, 20).

17. A reactor according to one of the preceding claims, **characterised in that** a suction pipe (23) whose suction opening is arranged at a distance to the filter plate stack (1) is arranged at the end of the filter plate stack (1), said distance corresponding to at least twice the filter plate stack height (h).

## Revendications

1. Réacteur avec un carter (18, 19, 20) ayant la forme d'un tube, dans lequel est disposé de manière rotative un empilement de plaques filtrantes (1), **caractérisé en ce que** la section transversale du carter de réacteur (18) dépasse la section transversale de l'empilement de plaques filtrantes (1) au moins dans la zone de l'empilement de plaques filtrantes (1) d'un maximum de 40 % et que l'étendue longitudinale (l) du carter de réacteur (18, 19, 20) est un multiple de l'étendue longitudinale (h) de l'empilement de plaques filtrantes (1), **en ce que** des dispositifs de traitement d'un fluide (24, 25) sont prévus à l'intérieur du carter de réacteur (18, 19, 20) et **en ce que** les dispositifs de traitement (1, 24, 25) sont parcourus les uns après les autres selon leur disposition dans le réacteur.

2. Réacteur selon la revendication 1, **caractérisé en ce que** l'axe de rotation de l'empilement de plaques filtrantes (1) et l'axe du carter de réacteur (18, 19, 20) sont disposés parallèlement et, de préférence, espacés l'un de l'autre.

3. Réacteur selon l'une des revendications précédentes, **caractérisé en ce que** l'empilement de plaques filtrantes (1) est disposé dans la zone d'extrémité du carter de réacteur (18, 19, 20) et est susceptible d'être mis en rotation de préférence par un entraînement (22) disposé du côté frontal à l'extérieur du carter de réacteur.

4. Réacteur selon l'une des revendications précédentes, **caractérisé en ce que**, à l'intérieur du carter de réacteur (18, 19, 20), est disposé au moins un réacteur à biofilm (24, 25), de préférence à l'extrémité opposée à l'empilement de plaques filtrantes (1).

5. Réacteur selon la revendication 4, **caractérisé en ce que** le réacteur à biofilm (24, 25) est susceptible d'être entraîné en rotation, l'entraînement étant réalisé via l'unité de filtres (1).

6. Réacteur selon la revendication 4, **caractérisé en ce que** l'entraînement (28) pour un réacteur à biofilm (24, 25) est disposé sur la face extérieure du carter de réacteur (18, 19, 20), de préférence sur une des faces frontales du carter de réacteur.

7. Réacteur selon la revendication 6, **caractérisé en ce que** l'entraînement (28) pour un réacteur à biofilm (24, 25) est disposé à l'extrémité du réacteur opposée à l'empilement de plaques filtrantes (1).

8. Réacteur selon l'une des revendications précédentes, **caractérisé en ce que** le carter de réacteur (18, 19, 20) est disposé de façon inclinée si bien que son axe longitudinal enferme avec l'horizontale un angle de préférence inférieur à 30°.

9. Réacteur selon l'une des revendications précédentes, **caractérisé en ce que** l'empilement de plaques filtrantes (1) est entraîné avec une vitesse circonférentielle de plus que 3 m/s.

10. Réacteur selon l'une des revendications précédentes, **caractérisé en ce que** le carter de réacteur est formé en matière synthétique, conçu de préférence en utilisant un tube extrudé en PVC, polyéthylène ou polypropylène, ayant un diamètre de plus que 200 mm.

11. Réacteur selon l'une des revendications précédentes, **caractérisé en ce qu'**il est prévu une régulation de niveau de remplissage qui maintient le niveau de remplissage de liquide du réacteur à une valeur prédéterminée, de préférence entre 50 % et 99 % du volume du réacteur.

12. Réacteur selon l'une des revendications précédentes, **caractérisé en ce que** des raccords de conduits pour l'acheminement et l'évacuation de fluide sont disposés du côté frontal dans le carter de réacteur.

13. Réacteur selon l'une des revendications précédentes, **caractérisé en ce qu'**un dispositif de ventilation est prévu.

14. Réacteur selon la revendication 13, **caractérisé en ce que** la sortie du dispositif de ventilation est disposée à l'intérieur de l'empilement de plaques filtrantes (1) et est réalisée de préférence par la surface de filtre.

15. Réacteur selon la revendication 13, **caractérisé en ce que** la sortie du dispositif de ventilation est disposée à l'intérieur de la zone du carter de réacteur (18, 19, 20) opposée à l'empilement de plaques filtrantes (1).

16. Réacteur selon l'une des revendications 13 à 15, **caractérisé en ce que** le dispositif de ventilation comprend une circulation interne à l'intérieur du carter (18, 19, 20).

17. Réacteur selon l'une des revendications précédentes, **caractérisé en ce qu'**en sortie de l'empilement de plaques filtrantes (1), un tube d'aspiration (23) est disposé dont l'ouverture d'aspiration est disposée à une distance de l'empilement de plaques filtrantes (1) qui correspond au moins au double de la hauteur (h) de l'empilement de plaques filtrantes.
